# EUROPEAN PATENT APPLICATION

(11) **EP 4 357 513 A1**
(43) Date of publication of application: **24.04.2024**
(21) Application number: 22824085.9
(22) Date of filing: 06.06.2022
(51) Int. Cl.: D06F 39/02, A47L 15/44, G06Q 30/06

(54) **AUTOMATIC FEEDING APPARATUS FOR CLOTHING TREATING AGENT AND METHOD FOR PURCHASING CLOTHING TREATING AGENT**

(30) Priority: 18.06.2021 CN 202110675913; 18.06.2021 CN 202110676260
(71) Applicant: Qingdao Haier Drum Washing Machine Co., Ltd., Qingdao, Shandong 266101 (CN); HAIER SMART HOME CO., LTD., Laoshan District Qingdao Shandong 266101 (CN)
(72) Inventor: ZHAO, Zhiqiang, Qingdao, Shandong 266101 (CN); XU, Sheng, Qingdao, Shandong 266101 (CN); LV, Peishi, Qingdao, Shandong 266101 (CN)
(74) Representative: Ziebig Hengelhaupt Intellectual Property Attorneys Patentanwaltskanzlei PartGmbB
(86) International application number: PCT/CN2022/097108
(87) International publication number: WO 2022/262605

(57) **Abstract**

An automatic dispensing apparatus for a laundry treatment agent and a method for purchasing a laundry treatment agent are provided. The automatic dispensing apparatus for a laundry treatment agent, comprises a liquid storage box for a laundry treatment agent, wherein, the liquid storage box is provided with a port for feeding the laundry treatment agent, and a cover is attached at the port; and the liquid storage box is provided with a sensing module for sensing that the cover is opened; alternatively, a sensing module is arranged between the liquid storage box and the liquid storage box installation chamber for sensing whether the liquid storage box is moved off the liquid storage box installation chamber. After obtaining the signal from the sensing module that the cover is opened, or that the liquid storage box is moved off the liquid storage box installation chamber, the signal that cover is opened or the liquid storage box is moved off the liquid storage box installation chamber is sent, and an order for purchasing the same type of laundry treatment agent as that in the liquid storage box is generated. Thus the overall sealing performance of a liquid storage box can be guaranteed, and it is solved the problems of contaminating the liquid storage box installation chamber by the residual detergent on the steel needle falling down when the liquid storage box is replaced.

## Description

### Field

The invention belongs to the field of automatic dispensing laundry treatment agents, and in particular relates to an automatic dispensing apparatus for laundry treatment agents and a method for purchasing laundry treatment agents.

### Background

As an essential household appliance in people's daily life, washing machine has more and more functions, and becomes also more and more intelligent and humanized.

At present, washing machines can be classed into washing machines with automatic dispensing function and washing machines without automatic dispensing function according to whether being capable of dispensing detergents by itself.

For a washing machine without an automatic dispensing function, user adds detergents in washing process. For a washing machine with an automatic dispensing function, detergent or softener can be automatically dispensed, and it can also reminder the use of adding or purchasing detergent or softener when the detergent or softener is about to be used up. The more intelligent washing machine can also automatically purchase detergent or softener according to the remaining amount of detergent or softener, which saves time for users to purchase detergents and simplifies purchase operations.

The Chinese patent application number CN201810891302.0 discloses a method for automatically purchasing detergents for a washing machine and the washing machine, including the following steps: determining that detergents are insufficient and issuing a purchase instruction if the washing machine detects that the current stored value of detergents is lower than the set value; the washing machine controlling detergents selected by the user to place an order by itself according to the purchase instruction.

The above-mentioned prior arts disclose that when the current storage value of the detergent is lower than the set value, an order is placed to purchase detergent by itself. However, the technical solution for determining the current storage value of the detergents generally employs the structure arranged in the liquid storage box for detecting the level of the detergents, such as a steel needle. However, if the steel needle is employed, it is necessary to consider the sealing performance of the liquid storage box for storing detergents, and the problems caused by the dripping of the residual detergent on the steel needle when the liquid storage box is replaced.

In view of the foregoing, the present invention is proposed.

### Summary

The technical solutions of the present invention are to overcome the deficiencies of the prior art. A first purpose is to provide an automatic dispensing apparatus of a laundry treatment agent. By arrangement of a sensing unit for sensing the cover is opened, the overall sealing performance of the liquid storage box is ensured. It is solved the problems of contaminating the liquid storage box installation chamber by the residual detergent on the steel needle falling down when the liquid storage box is replaced.

In order to solve the above problems, the present invention adopts the following concepts of the technical solutions.

An automatic dispensing apparatus for a laundry treatment agent, comprises a liquid storage box for a laundry treatment agent, wherein, the liquid storage box is provided with a port for feeding the laundry treatment agent, and a cover is attached at the port.

The liquid storage box is provided with a sensing module for sensing that the cover is opened

Signal that the cover is opened to generate an order for purchasing the same type of laundry treatment agent as that in in the liquid storage box is sent, after the sensing module obtains the signal that the cover is opened.

The liquid storage box is provided with a wireless communication unit, and the wireless communication unit is communicated with the sensing module for sending that signal that the cover is opened.

Preferably, the wireless communication unit is one selected from a group consisting of Bluetooth, infrared, and near field communication.

Further, a body and the cover are pivotally connected with each other; and the sensing module includes an angle sensor attached on a pivot shaft between the body and the cover for detecting an angle at which the cover is opened.

A second object of the present invention is to provide a method for purchasing laundry treatment agent. By obtaining the signal that the cover is opened, and generating an order for purchasing the same type of laundry treatment agent with that in the liquid storage box, there is no need to set a steel needle on the liquid storage box for detecting the liquid level. It is solved the problems of contaminating the liquid storage box installation chamber by the residual detergent on the steel needle falling down when the liquid storage box is replaced.

A method for purchasing a laundry treatment agent, comprises,
obtaining a signal that the cover is opened;
generating an order for purchasing the same type of laundry treatment agent as that in the liquid storage box, wherein,
the method is executed on an automatic dispensing apparatus for laundry treatment agent or on a laundry treatment appliance.

Further, a process of obtaining the signal that the cover is opened comprises: obtaining a signal that an opening angle between the cover and body exceeds a set threshold.

Further, after obtaining the signal that the cover is opened, and before generating an order for purchasing the same type of laundry treatment agent as that in the liquid storage box, a process also is comprised: sending confirming information to user whether to generate an order for purchasing the laundry treatment agent, and generating the order after receiving the information confirming to generate the order by user.

Further, a process of generating an order for purchasing the same type of laundry treatment agent as that in the liquid storage box comprises,
obtaining an order record of purchasing a laundry treatment agent by user, determining a laundry treatment agent purchased most frequently in the order record of the user within a preset time from the current date, and generating an order according to the information of the laundry treatment agent purchased most frequently.

Further, a process of generating an order for purchasing the same type of laundry treatment agent as that in the liquid storage box comprises,
obtaining type information and material information of laundry set by the user; recommending a laundry treatment agent according to the set type information and material information of laundry after receiving a signal that the cover is opened, and generating an order according to the laundry treatment agent recommended.

Further, a process of generating an order for purchasing the same type of laundry treatment agent as that in the liquid storage box comprises,
obtaining information of an installation structure of the liquid storage box, generating an order for purchasing the same type of laundry treatment agent as that in the storage box, wherein the liquid storage box for storing a laundry treatment agent in the order is matched with the information of the installation structure of the liquid storage box.

Further, the following steps are included:
S 1, obtaining an angle at which the cover is opened;
S2, determining whether the angle at which the cover is opened exceeds a set threshold, if yes, executing step S3; if not, standing by;
S3, sending confirming information whether to generate an order for purchasing the laundry treatment agent;
S4, determining whether to receive the confirming information for generating an order for purchasing laundry treatment agent, if so, executing step S5; if not, standing by;
S5. retrieving the information of the laundry treatment agent recommended to be purchased, and generating an order for purchasing the laundry treatment agent.

A third object of the present invention is to provide an automatic dispensing apparatus of a laundry treatment agent. By arrangement of sensing unit for sensing the liquid storage box is pulled out, the overall sealing performance of the liquid storage box is ensured. It is solved the problems of contaminating the liquid storage box installation chamber by the residual detergent on the steel needle falling down when the liquid storage box is replaced.

An automatic dispensing apparatus for a laundry treatment agent, comprises a liquid storage box for a laundry treatment agent and a liquid storage box installation chamber, wherein, a sensing module is arranged between the liquid storage box and the liquid storage box installation chamber for sensing whether the liquid storage box is moved off the liquid storage box installation chamber.

After obtaining the signal from the sensing module that the liquid storage box is moved off the liquid storage box installation chamber, the signal that the liquid storage box is moved off the liquid storage box installation chamber is sent, and an order for purchasing the same type of laundry treatment agent as that in the liquid storage box is generated.

Further, the sensing module comprises,
a near-field communication chip, set on the liquid storage box; and
a reader for the near-field communication chip, set on the liquid storage box installation chamber; wherein,
when the chip reader for the near-field communication chip fails to identify the near-field communication chip, sending a signal that the liquid storage box is moved off the liquid storage box installation chamber.

Further, the near-field communication chip comprises an RFID chip or an NFC chip.

The reader for the near-field communication chip comprises an RFID chip reader or an NFC chip reader.

Further, the sensing module comprises,
an abutting portion, slidably disposed in the liquid storage box installation chamber; and
a distance sensor, used for sensing a distance by which the abutting portion is pushed by the liquid storage box, to determine whether the liquid storage box is moved off the liquid storage box installation chamber.

Further, the liquid storage box is provided with a wireless communication unit, and the wireless communication unit is connected to the sensing module for sending a signal that the liquid storage box is moved off the liquid storage box installation chamber.

Preferably, the wireless communication unit is one selected from a group consisting of Bluetooth, infrared, and near field communication.

A fourth object of the present invention is to provide a method for purchasing laundry treatment agents. By obtaining the signal that liquid storage box is moved off a liquid storage box installation chamber, and generating an order for purchasing the same type of laundry treatment agent with that in the liquid storage box, there is no need to set a steel needle on the liquid storage box for detecting the liquid level. It is solved the problems of contaminating the liquid storage box installation chamber by the residual detergent on the steel needle falling down when the liquid storage box is replaced.

A method for purchasing a laundry treatment agent, comprises,
obtaining a signal that a liquid storage box is moved off a liquid storage box installation chamber;
generating an order for purchasing the same type of laundry treatment agent as that in the liquid storage box, wherein, the method is executed on an automatic dispensing apparatus for laundry treatment agent or on a laundry treatment appliance.

Further, a process of obtaining the signal that the liquid storage box is moved off the liquid storage box installation chamber comprises, obtaining a signal that a reader disposed on the installation structure of the liquid storage box cannot identify a signal of the near-field chip of the liquid storage box.

Further, a process of obtaining the signal that the liquid storage box is moved off the liquid storage box installation chamber comprises, obtaining a signal that a movement distance of the abutting portion arranged in the liquid storage box installation chamber is greater than a set threshold.

Further, after obtaining the signal that the liquid storage box is moved off the liquid storage box installation chamber, and before generating an order for purchasing the same type of laundry treatment agent as that in the liquid storage box, a process also is comprised: sending confirming information to user whether to generate an order for purchasing the laundry treatment agent, and generating the order after receiving the confirming information to generate the order by user.

Further, a process of generating an order for purchasing the same type of laundry treatment agent as that in the liquid storage box comprises,
obtaining an order record of purchasing a laundry treatment agent by user, and determining a laundry treatment agent purchased most frequently in the order record of the user within a preset time from the current date, and generating an order according to the information of the laundry treatment agent purchased most frequently; or,
obtaining type information and material information of laundry set by the user on the server; recommending a laundry treatment agent by the server according to the set type information and material information of laundry when receiving a signal that the liquid storage box is moved off the liquid storage box installation chamber, and generating an order according to the laundry treatment agent recommended by the server.

After adopting the above technical solution, the present invention has the following beneficial effects compared with the prior art.
1. In the prevent invention, by arrangement of a sensing unit for sensing the cover is opened, or sensing the liquid storage box is pulled out, the overall sealing performance of the liquid storage box is ensured. It is solved the problems of contaminating the liquid storage box installation chamber by the residual detergent on the steel needle falling down when the liquid storage box is replaced.
2. In the prevent invention, by obtaining the signal that the cover is opened or that the liquid storage box is moved off the liquid storage box installation chamber, and generating an order for purchasing the same type of laundry treatment agent with that in the liquid storage box, there is no need to set a steel needle on the liquid storage box for detecting the liquid level. It is solved the problems of contaminating the liquid storage box installation chamber by the residual detergent on the steel needle falling down when the liquid storage box is replaced.
3. The present invention further limits the conditions for sending the signal that the cover is opened or the liquid storage box is moved off the liquid storage box installation chamber, so as to avoid generating some invalid orders for purchasing laundry treatment agent to cause the trouble to the user,

The specific implementation manners of the present invention are further described in detail below in conjunction with the accompanying drawings.

### Description of drawings

Accompanying drawings as a part of the present disclosure are used for further understanding the present disclosure, and the embodiments of the present disclosure and description thereof are used for explaining the present disclosure and do not constitute an improper limitation on the present disclosure. Apparently, the accompanying drawings in the following description are only some embodiments, for those ordinarily skilled in the art, on the premise of no creative labor, other accompanying drawings can further be obtained from these accompanying drawings. In the figures:
Fig. 1 is a schematic diagram of an automatic dispensing apparatus for laundry treatment agent in a first embodiment of the present invention;
Fig. 2 is a schematic diagram of an automatic dispensing apparatus for laundry treatment agent in a second embodiment of the present invention;
Fig. 3 is a schematic diagram of an automatic dispensing device for laundry treatment agent in a third embodiment of the present invention;
Fig. 4 is a schematic diagram of a liquid storage box in an embodiment of the present invention;
Fig. 5 is a schematic flow chart of a method for purchasing laundry treatment agents in a first embodiment of the present invention;
Fig. 6 is a schematic flow chart of a method for purchasing laundry treatment agents in a second embodiment of the present invention;
Fig. 7 is a schematic flow chart of a method for purchasing laundry treatment agents in a third embodiment of the present invention;
Fig. 8 is a schematic flow chart of a method for purchasing laundry treatment agents in a fourth embodiment of the present invention;
Fig. 9 is a schematic flow chart of a method for purchasing laundry treatment agents in a fifth embodiment of the present invention.

In the figure: 1. Liquid storage box; 11. Body; 12. Cover; 2. Liquid storage box installation chamber; 3. First sensing module; 301, NFC chip; 302, NFC chip reader; 311, RFID Chip; 312, RFID chip reader; 321, Abutting portion; 322, Distance sensor; 4, Second sensing module; 41, Angle sensor.

It should be noted that these drawings and descriptions are not intended to limit the scope of the present invention in any way, but illustrate the concept of the present invention for those skilled in the art by referring to specific embodiments.

### Embodiments

In order to make objects, technical solutions and advantages of the embodiments of the present invention clearer, the solutions in the embodiments are clearly and completely described as follows in combination with accompanying drawings in the embodiments of the present invention. The following embodiments are used for illustrating the present invention, rather than limiting the scope of the present invention.

In the description of the present invention, it should be noted that, the orientation or positional relationship indicated by such terms as "up", "down", "front", "rear", "left", "right", "vertical", "inner" and "outer" is the orientation or positional relationship based on the accompanying drawings. Such terms are merely used for conveniently and simplified describing the present invention, rather than indicating or implying that the device or element referred to must be located in a certain orientation or must be constructed or operated in a certain orientation. Therefore, the terms cannot be understood as a limitation to the present invention.

In the description of the present invention, it should be noted that, unless otherwise stipulated and defined definitely, such terms as "installed", "connected" and "in connection" should be understood in their broad sense, e.g., the connection can be a fixed connection, a detachable connection or an integral connection; can be mechanical connection or electrical connection; and can be direct connection or can be indirect connection through an intermediate. For those skilled in the art, specific meanings of the above terms in the present invention can be understood according to specific conditions.

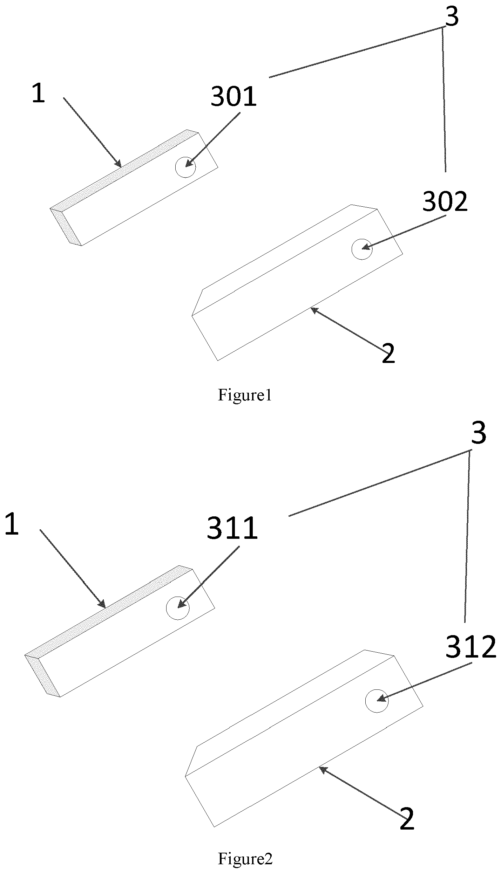

As shown in FIGS. 1 to 9, the present invention discloses an automatic dispensing apparatus for laundry treatment agents and a method for purchasing laundry treatment agents.

The automatic dispensing apparatus for laundry treatment agents includes a liquid storage box installation chamber 2, and the liquid storage box installation chamber 2 has several accommodation spaces for installing several liquid storage boxes 1 for storing different types of laundry treatment agents. The liquid storage box 1 is provided with a liquid outlet. The automatic dispensing apparatus for laundry treatment agents also includes a dispensing mechanism being communicated with the liquid outlets of the liquid storage boxes 1, and is used for dispensing the laundry treatment agents in the liquid storage boxes 1 into the laundry treatment cylinder of the laundry treatment appliance according to a predetermined time sequence.

As shown in FIGS. 1 to 3, a first sensing module 3 is arranged between the liquid storage box 1 and the liquid storage box installation chamber 2 for sensing whether the liquid storage box 1 is moved off the liquid storage box installation chamber 2. A control unit generates an order for purchasing the same type of laundry treatment agent as that in the liquid storage box 1 after obtaining the signal from the first sensing module 3 that the liquid storage box 1 is moved off the liquid storage box installation chamber 2.

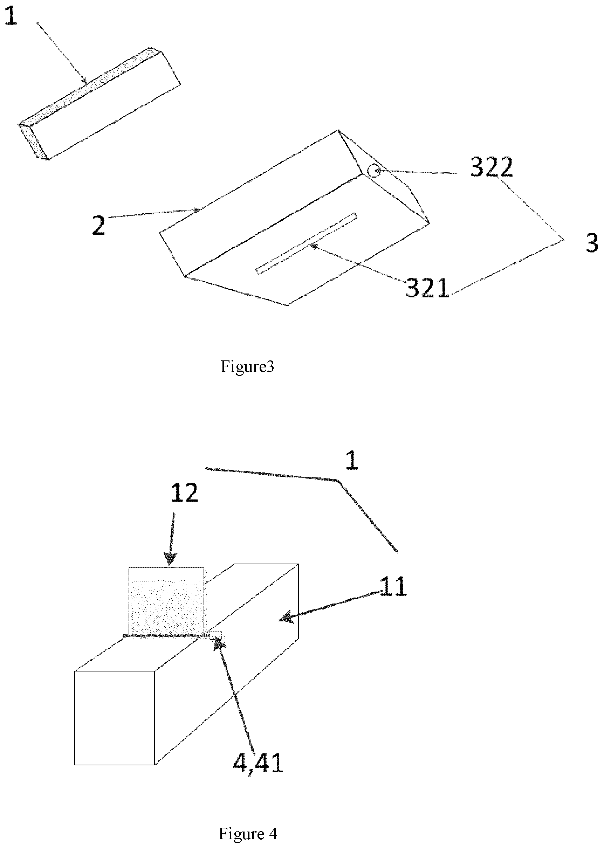

Alternatively, as shown in FIG. 4, the liquid storage box 1 is provided with a second sensing module 4 for sensing whether a cover 12 of the liquid storage box 1 is opened. A control unit generates an order for purchasing the same type of laundry treatment agent as that in the liquid storage box 1 after obtaining the signal from the second sensing module 4 that the cover 12 is opened.

In the above solutions, by setting the first sensing module 3 for sense that the liquid storage box 1 is drawn out or the second sensing module 4 for sensing that the cover 12 is opened, it is unnecessary to set a steel needle for detecting the liquid level on the liquid storage box 1. On the one hand, it ensures the overall sealing performance of the liquid storage box 1, and on the other hand, it is avoided the residual detergent on the steel needle is dripped to pollute the liquid storage box installation chamber 2 when the liquid storage box 1 is replaced.

The above is the concept of the present invention. In order to better understand the technical solution of the present invention for those skilled in the art, the present invention is further described in detail below in conjunction with the accompanying drawings.

The automatic dispensing apparatus for laundry treatment agent in the present invention may be installed on the laundry treatment appliance, or may be independent from and set separately from the laundry treatment equipment.

In some embodiments of the present invention, as shown in FIG. 2, the first sensing module 3 includes an RFID chip 311 and an RFID chip reader 312 that cooperate with each other. The RFID chip 311 is set on the liquid storage box 1, and the RFID chip reader 312 is set on the liquid storage box installation chamber 2.

When the liquid storage box 1 is pulled out from the liquid storage box installation chamber 2 by greater than a certain distance, the RFID chip reader 312 cannot recognize the signal of the RFID chip 311. At this time it is determined that the liquid storage box 1 is moved off the liquid storage box installation chamber 2, and the RFID chip reader 312 sends a signal to the control unit that the liquid storage box 1 is moved off the liquid storage box installation chamber 2, so that the control unit generates an order for purchasing the same type of laundry treatment agent as that in the liquid storage box 1.

In some embodiments of the present invention, as shown in FIG. 1, the first sensing module 3 includes an NFC chip 301 and an NFC chip reader 302 that cooperate with each other. The NFC chip 301 is set on the liquid storage box 1, and the NFC chip reader 302 is set on the liquid storage box installation chamber 2.

When the liquid storage box 1 is pulled out from the liquid storage box installation chamber 2 by greater than a certain distance, the NFC chip reader 302 cannot recognize the signal of the NFC chip 301. At this time it is determined that the liquid storage box 1 is moved off the liquid storage box installation chamber 2, and the NFC chip reader 302 sends a signal to the control unit that the liquid storage box 1 is moved off the liquid storage box installation chamber 2, so that the control unit generates an order for purchasing the same type of laundry treatment agent as that in the liquid storage box 1.

In some embodiments of the present invention, as shown in FIG. 3, the first sensing module 3 includes an abutting portion 321 and a distance sensor 322. The abutting portion 321 is slidably disposed in the liquid storage box installation chamber 2, and the distance sensor 322 is connected with the abutting portion 321 for sensing the distance by which the abutting portion 321 is pushed by the liquid storage box, so that it is determined whether the liquid storage box 1 is moved off the liquid storage box installation chamber 2.

In detail, a chute is provided at the bottom of each liquid storage box installation chamber 2. The abutting portion 321 includes a base and a push rod, and an elastic unit is arranged between the base and the push rod. When the liquid storage box 1 is installed in the liquid storage box installation chamber 2, the liquid storage box 1 pushes the push rod to move in the liquid storage box installation chamber 2, and compresses the elastic unit. When the liquid storage box 1 is pulled out, the restoring force of the elastic unit pushes the push rod to move in the liquid storage box installation chamber 2. At this time, the distance sensor 322 can detect the moving distance of the push rod, or the distance from the rear side wall of the liquid storage box installation chamber 2. If the moving distance of the push rod is over a set threshold, the distance sensor 322 sends the signal of the liquid storage box installation chamber 2 to the control unit, so that the control unit generates an order for purchasing the same type of laundry treatment agent as that in the liquid storage box 1 according to the signal.

It should be noted that the control unit in the above technical solution may be the control unit of the automatic dispensing apparatus for laundry treatment agent, the control unit of the laundry treatment appliance, or the server. The control units mentioned in the following solutions are not used as limited.

In some embodiments of the present invention, the liquid storage box 1 is provided with a wireless communication unit, and the wireless communication unit is communicated with the sensing module for sending a signal that the cover 12 is opened.

Preferably, the wireless communication unit is one selected from a group consisting of Bluetooth, infrared, and near field communication.

In detail, when the sensing module senses that the cover 12 is opened, a signal that the covered body 12 is opened is sent to the control unit, so that the control unit executes the next step according to the signal.

In some embodiments of the present invention, as shown in FIG. 4, the liquid storage box 1 includes a body 11 and a cover 12 that are pivotally connected with each other. The second sensing module includes an angle sensor 41 attached on the pivot shaft between the body and the cover 12.

In detail, when a flipped angle of the cover 12 exceeds a set threshold, it is determined that the cover 12 is opened, and the angle sensor 41 sends a signal to the control unit that the cover 12 is opened, so that the control unit generates an order for purchasing the same type of laundry treatment agent as that in the liquid storage box 1 according to the signal.

In some embodiments of the present invention, the types of the laundry treatment agents can be memorized, and the user can voluntarily change the types of the stored laundry treatment agents. The control unit can confirm the liquid storage boxes 1 for different laundry treatment agents through the detection unit, and can automatically correct the timing sequence of the laundry treatment agents in the care program according to the positions of the liquid storage boxes 1, so as to effective control prompts and automatically change the dispensing process of the dispensing system. Therefore the needs of consumers are greatly met.

In detail, the RFID or NFC chip 301 of the liquid storage box 1 can be read by the processor of the laundry treatment appliance, and can be acquired by the APP of the smart terminal. The internal information can be input or changed through the operation panel of the laundry treatment appliance, or can be input or changed through the APP of the smart terminal.

The RFID or NFC chip 301 of the liquid storage box 1 can be connected with the liquid storage box 1 in various manners, such as integral injection molding, screw fastening, welding, pasting, clamping and so on.

In practical applications, the user uses the liquid storage box 1 with the NFC chip 301. When the liquid storage box 1 for storing detergent is put in the liquid storage box installation chamber 2 for softener by user, the laundry treatment appliance automatically identifies and changes the dispensing sequence of the liquid storage box. Even if the liquid storage box 1 is misplaced, the laundry treatment appliance still can identify that the liquid storage box is filled with detergent or softener, and dispense it accordingly.

In practical application, the user uses the liquid storage box 1 with the NFC chip 301. When the liquid storage boxes for storing a various of laundry treatment agents such as softener, disinfectant, bleach are put in the liquid storage box installation chambers 2 by user and there is no detergent, the laundry treatment appliance can automatically identify the type of agents, but it has no ability to replace with the liquid storage box 1 for storing detergent, so the laundry treatment appliance prompts the user to forget to place the liquid storage box 1 for storing detergent.

In practical application, the user likes a certain brand of laundry treatment agent very much. For example, a young woman prefers the perfumed detergent of Sylvia very much, and the user can input or update the information of the liquid storage box 1 through the laundry treatment appliance, smartphone APP or the automatic dispensing apparatus. Once the liquid storage box 1 for storing the perfumed detergent of Sylvia is inserted into the liquid storage box installation chamber 2, the laundry treatment appliance or the automatic dispensing apparatus can identify that the liquid storage box 1 in the liquid storage box installation chamber 2 is filled with the perfumed detergent of Sylvia.

In practical application, when the liquid storage box 1 for storing the laundry treatment agent is opened and closed every time, or when every time the liquid storage box 1 is taken away from or put in the liquid storage box installation chamber 2, the RFID/NFC chip reader is triggered to re-scan the RFID/NFC chip 301 of the liquid storage box 1 to read and compare the information.

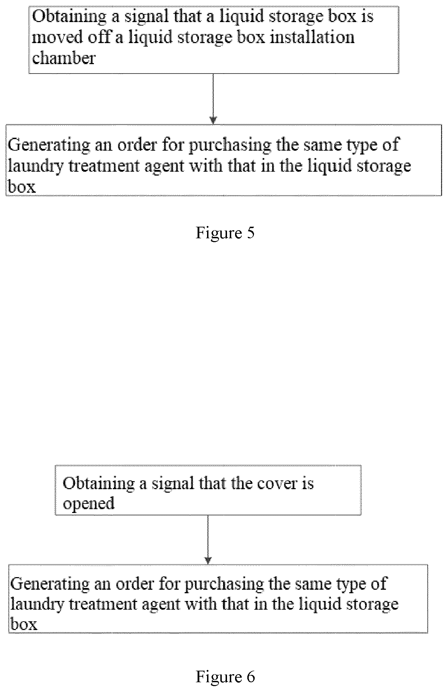

The method for purchasing laundry treatment agent in the present invention includes the following steps, as shown in Figures 5 to 9:
obtaining a signal that the liquid storage box 1 is moved off the liquid storage box installation chamber 2, or obtaining a signal that the cover 12 is opened; and
generating an order for purchasing the same type of laundry treatment agent as that in the liquid storage box 1.

The method for purchasing laundry treatment agent can utilize the above-mentioned automatic dispensing apparatus for the laundry treatment agent.

In some embodiments of the present invention, a process of obtaining the signal that the liquid storage box 1 is moved off the liquid storage box installation chamber 2 includes: obtaining a signal that the reader disposed on the installation structure of the liquid storage box 1 cannot identify a signal of the near-field chip of the liquid storage box 1.

In detail, the first sensing module 3 includes an RFID chip 311 and an RFID chip reader 312 that cooperate with each other. The RFID chip 311 is set on the liquid storage box 1; and the RFID chip reader 312 is set on the liquid storage box installation chamber 2.

When the liquid storage box 1 is pulled out from the liquid storage box installation chamber 2 by a certain distance, the RFID chip reader 312 cannot identify the signal of the RFID chip 311. At this time it is determined that the liquid storage box 1 is moved off the liquid storage box installation chamber 2, and the RFID chip reader 312 sends a signal that the liquid storage box 1 is moved off the liquid storage box installation chamber 2 to the control unit, so that the control unit generates an order for purchasing the same type of laundry treatment agent as that in the liquid storage box 1.

Alternatively, the first sensing module 3 includes an NFC chip 301 and an NFC chip reader 302 that cooperate with each other. The NFC chip 301 is set on the liquid storage box 1; and the NFC chip reader 302 is set on the liquid storage box installation chamber 2.

When the liquid storage box 1 is pulled out from the liquid storage box installation chamber 2 by a certain distance, the NFC chip reader 302 cannot identify the signal of the NFC chip 301. At this time, it is determined that the liquid storage box 1 is moved off the liquid storage box installation chamber 2, and the NFC chip reader 302 sends a signal that the liquid storage box 1 is moved off the liquid storage box installation chamber 2 to the control unit, so that the control unit generates an order for purchasing the same type of laundry treatment agent as that in the liquid storage box 1.

In some embodiments of the present invention, a process of obtaining the signal that the liquid storage box 1 is moved off the liquid storage box installation chamber 2 includes: obtaining a signal that a movement distance of the abutting portion 321 arranged in the liquid storage box installation chamber 2 is greater than the set threshold.

In detail, the first sensing module 3 includes an abutting portion 321 and a distance sensor 322. The abutting portion 321 is slidably disposed in the liquid storage box installation chamber 2; and the distance sensor 322 is connected with the abutting portion 321 for sensing the distance by which that the abutting portion 321 is pushed by the liquid storage box, so that it is determined whether the liquid storage box 1 is moved off the liquid storage box installation chamber 2.

In detail, a chute is provided at the bottom of each liquid storage box installation chamber 2. The abutting portion 321 includes a base and a push rod, and an elastic unit is arranged between the base and the push rod. When the liquid storage box 1 is installed in the liquid storage box installation chamber 2, the liquid storage box 1 pushes the push rod to move in the liquid storage box installation chamber 2, and compresses the elastic unit. When the liquid storage box 1 is pulled out, the restoring force of the elastic unit pushes the push rod to move in the liquid storage box installation chamber 2. At this time, the distance sensor 322 can detect the moving distance of the push rod, or the distance from the rear side wall of the liquid storage box installation chamber 2. If the moving distance of the push rod is over a set threshold, the distance sensor 322 sends the signal of the liquid storage box installation chamber 2 to the control unit, so that the control unit generates an order for purchasing the same type of laundry treatment agent as that in the liquid storage box 1 according to the signal.

It should be noted that the control unit in the above technical solution may be the control unit of the automatic dispensing apparatus for laundry treatment agent, the control unit of the laundry treatment appliance, or the server. The control units mentioned in the following solutions are not used as limited.

In some embodiments of the present invention, a process of obtaining the signal that the cover 12 is opened includes: obtaining a signal that an opening angle of the cover 12 exceeds a set threshold.

In detail, the liquid storage box 1 includes a body 11 and a cover 12 which are pivotally connected with each other. The second sensing module 4 includes an angle sensor 41 attached on the pivot shaft between the body 11 and the cover 12.

Specifically, when a flipped angle of the cover 12 exceeds a set threshold, it is determined that the cover 12 is opened, and the angle sensor 41 sends a signal to the control unit that the cover 12 is opened, so that the control unit generates an order for purchasing the same type of laundry treatment agent as that in the liquid storage box 1 according to the signal.

The above technical solution further defines the conditions for sending the signal that the liquid storage box 1 is moved off the liquid storage box installation chamber 2 or the signal that the cover 12 is opened, so as to avoid generating some invalid orders for purchasing laundry treatment agent to cause the trouble to the user.

In some embodiments of the present invention, after obtaining the signal that the liquid storage box 1 is moved off the liquid storage box installation chamber 2 or obtaining the signal that the cover 12 is opened, and before generating an order for purchasing the same type of laundry treatment agent as that in the liquid storage box 1, a process also is included: sending confirming information to user whether to generate an order for purchasing the laundry treatment agent, and generating the order after receiving the confirming information to generate the order by user.

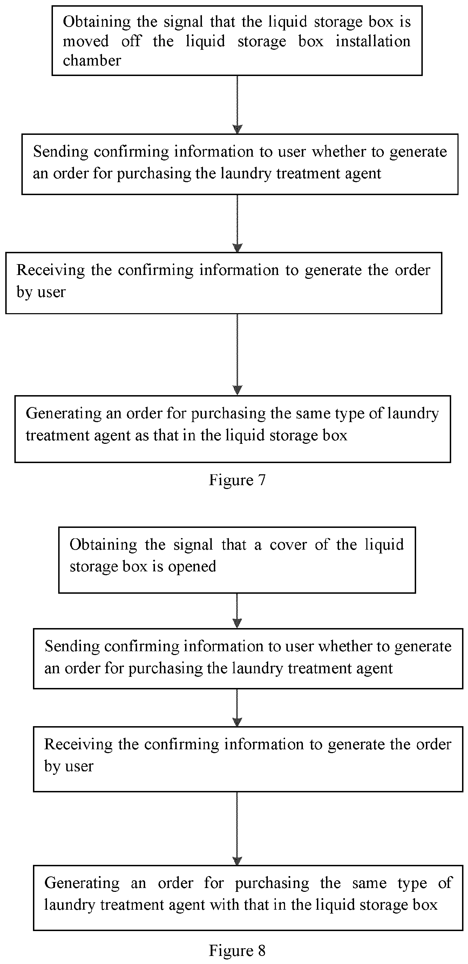

In detail, as shown in FIG. 7 and FIG. 8, the user can open the cover 12 to observe the remaining amount of the laundry treatment agent in the liquid storage box 1, or some users, who do not know that the cover 12 has the function of triggering order, may inadvertently open the cover 12. At this time, although a signal that the cover 12 is opened is sent to the control unit, an order for purchasing the laundry treatment agent is not immediately generated. Confirming information whether to purchase the laundry treatment agent should be sent to the user, and an order is generated after the user confirms. If it is not necessary to purchase the laundry treatment agent at this time, a signal that the user cancels to generate the order is fed back to the control unit, and the control unit does not generate the order.

Alternatively, in the following scenarios, some users having higher demands on sanitary conditions can take out the liquid storage box 1 from the liquid storage box installation chamber 2 for cleaning from time to time. At this time, it is obviously not necessary to generate an order for purchasing the laundry treatment agent. Therefore, information should be sent to the user for confirming whether to generate an order for purchasing the laundry treatment agent, and the order is generated after the user confirms. If it is not necessary to purchase the laundry treatment agent, a signal that the user cancels to generate the order is fed back to the control unit, and the control unit does not generate the order.

In some embodiments of the present invention, a process of generating an order for purchasing the same type of laundry treatment agent as that in the liquid storage box 1 includes: obtaining an order record of purchasing a laundry treatment agent by user, and determining a laundry treatment agent purchased most frequently in the order record of the user within a preset time from the current date, and generating an order according to the information of the laundry treatment agent purchased most frequently.

Alternatively, a process of generating an order for purchasing the same type of laundry treatment agent as that in the liquid storage box 1 includes: obtaining type information and material information of laundry set by the user on the server; the server recommending a laundry treatment agent according to the set type information and material information of laundry when receiving a signal that the liquid storage box 1 is moved off the liquid storage box installation chamber 2, or that the cover 12 is opened, and generating an order according to the laundry treatment agent recommended by the server.

In detail, by analyzing the order record of purchasing laundry treatment agent by the user or analyzing the type information and material information of laundry set by the user on the server, the control unit can recommend to purchase a laundry treatment agent for specific group in user's family, such as infant.

The care program of the laundry treatment equipment is closely related to the laundry treatment agent, so when the laundry treatment agent being not suitable for the care program is used to care for laundry, laundry are likely to be damaged.

For example, for some care programs, a preset temperature of the washing water is greater than 30°C, and further in a range of 40°C to 60°C. If some detergents are used to wash infant's laundry made by the materials containing usually the relatively high proportion of cotton, the material of infant's laundry can be changed, such as some unknown dark spots is appear.

Therefore, if the control unit determines that there is specific group in user's family, such as infant, the control unit recommends a laundry treatment agent being more suitable for materials with a high proportion of cotton to user.

In some embodiments of the present invention, a process of generating an order for purchasing the same type of laundry treatment agent as that in the liquid storage box 1 includes: obtaining information of the installation structure of the liquid storage box installation chamber 2, generating an order for purchasing the same type of laundry treatment agent as that in the storage box 1, wherein the liquid storage box 1 for storing the laundry treatment agent in the order is matched with the information of the installation structure of the liquid storage box installation chamber 2.

Further, a process of generating an order for purchasing the same type of laundry treatment agent as that in the liquid storage box 1 also includes: obtaining information of an electronic label on the liquid storage box 1, so that the additive dispensing apparatus can release the dispensing mechanism of the automatic dispensing apparatus for laundry treatment agent after identifying the parameter information of the electronic label.

The above solution, the liquid storage box 1 for the laundry treatment agent in the order can be matched with the installation structure of the automatic dispensing apparatus, so that the automatic dispensing apparatus can release the dispensing mechanism of the automatic dispensing apparatus after identifying the parameter information in the electronic label. It is avoided that the purchased product cannot be used if the laundry treatment agent is not matched with the automatic dispensing apparatus.

In some embodiments of the present invention, a process of generating an order for purchasing the same type of laundry treatment agent as that in the liquid storage box 1 includes: obtaining special offer information about the same type of laundry treatment agent with that in the liquid storage box 1 being sold on shopping platforms; determining the shopping platform with a largest discount; and generating an order on the shopping platform with the largest discount.

By the above solution, the consumption of the laundry treatment agent can be saved for the user, and the user experience is improved.

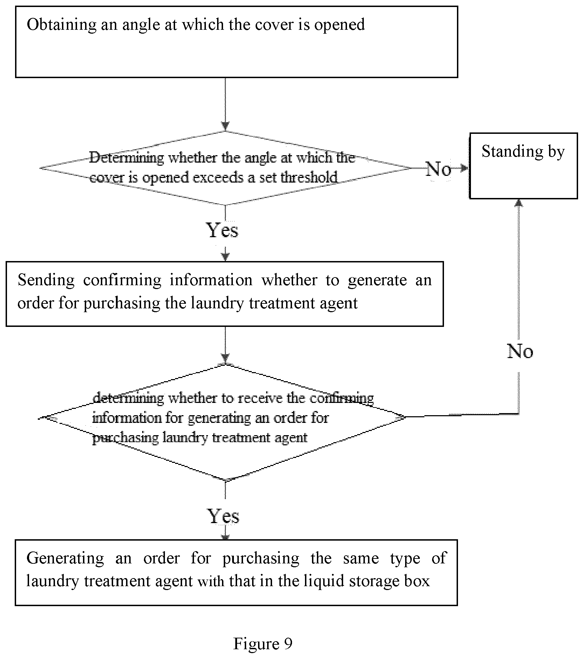

In the specific scheme, the method for purchasing the laundry treatment agent includes the following steps, as shown in Figure 9:
S 1, obtaining an angle at which the cover 12 is opened;
S2, determining whether the angle at which the cover is opened exceeds a set threshold, if yes, executing step S3; if not, standing by;
S3, sending confirming information whether to generate an order for purchasing the laundry treatment agent;
S4, determining whether to receive the confirming information for generating an order for purchasing laundry treatment agent, if so, executing step S5; if not, standing by;
S5. retrieving the information of the laundry treatment agent recommended to be purchased, and generating an order for purchasing the laundry treatment agent.

The above description is only preferred embodiments of the present invention, and is not intended to limit the present invention in any way. Although the present invention has been disclosed in the preferred embodiments, it is not intended to limit the present invention. Any technician familiar with this patent can make some changes or modifications to equivalent embodiments with equivalent changes by using the above-mentioned technical contents without departing from the scope of the technical solution of the present invention. However, any simple amendments, equivalent changes and modifications made to the above embodiments according to the technical essence of the present invention without departing from the contents of the technical solution of the present invention are still within the scope of the solution of the present invention.

## Claims

1. An automatic dispensing apparatus for a laundry treatment agent, comprising a liquid storage box for a laundry treatment agent, wherein,
the liquid storage box is provided with a port for feeding the laundry treatment agent, and a cover is attached at the port;
the liquid storage box is provided with a sensing module for sensing that the cover is opened; and
a signal that the cover is opened to generate an order for purchasing the same type of laundry treatment agent as that in in the liquid storage box is sent, after the sensing module obtains the signal that the cover is opened.

2. The automatic dispensing apparatus for a laundry treatment agent according to claim 1, wherein,
the liquid storage box is provided with a wireless communication unit, and the wireless communication unit is communicated with the sensing module for sending that signal that the cover is opened;
preferably, the wireless communication unit is one selected from a group consisting of Bluetooth, infrared, and near field communication.

3. The automatic dispensing apparatus for a laundry treatment agent according to claim 1 or 2, wherein,
a body and the cover are pivotally connected with each other; and
the sensing module includes an angle sensor attached on a pivot shaft between the body and the cover for detecting an angle at which the cover is opened.

4. A method for purchasing a laundry treatment agent, being executed on an automatic dispensing apparatus for laundry treatment agent or on a laundry treatment appliance, comprising,
obtaining a signal that the cover is opened;
generating an order for purchasing the same type of laundry treatment agent with that in the liquid storage box.

5. The method for purchasing a laundry treatment agent according to claim 4, wherein,
a process of obtaining the signal that the cover is opened comprises: obtaining a signal that an opening angle between the cover and body exceeds a set threshold.

6. The method for purchasing a laundry treatment agent according to claim 4 or 5, wherein,
after obtaining the signal that the cover is opened, and before generating an order for purchasing the same type of laundry treatment agent as that in the liquid storage box, a process also is comprised: sending confirming information to user whether to generate an order for purchasing the laundry treatment agent, and generating the order after receiving the information confirming to generate the order by user.

7. The method for purchasing a laundry treatment agent according to claim 4 or 5, wherein, a process of generating an order for purchasing the same type of laundry treatment agent as that in the liquid storage box comprises,
obtaining an order record of purchasing a laundry treatment agent by user, determining a laundry treatment agent purchased most frequently in the order record of the user within a preset time from the current date, and generating an order according to the information of the laundry treatment agent purchased most frequently.

8. The method for purchasing a laundry treatment agent according to claim 4 or 5, wherein, a process of generating an order for purchasing the same type of laundry treatment agent as that in the liquid storage box comprises,
obtaining type information and material information of laundry set by the user; recommending a laundry treatment agent according to the set type information and material information of laundry after receiving a signal that the cover is opened, and generating an order according to the laundry treatment agent recommended.

9. The method for purchasing a laundry treatment agent according to claim 4 or 5, wherein, a process of generating an order for purchasing the same type of laundry treatment agent as that in the liquid storage box comprises,
obtaining information of an installation structure of the liquid storage box, generating an order for purchasing the same type of laundry treatment agent as that in the storage box, wherein the liquid storage box for storing a laundry treatment agent in the order is matched with the information of the installation structure of the liquid storage box.

10. The method for purchasing a laundry treatment agent according to claim 4 or 5, comprising:
S 1, obtaining an angle at which the cover is opened;
S2, determining whether the angle at which the cover is opened exceeds a set threshold, if yes, executing step S3; if not, standing by;
S3, sending confirming information whether to generate an order for purchasing the laundry treatment agent;
S4, determining whether to receive the confirming information for generating an order for purchasing laundry treatment agent, if so, executing step S5; if not, standing by;
S5. retrieving the information of the laundry treatment agent recommended to be purchased, and generating an order for purchasing the laundry treatment agent.

11. An automatic dispensing apparatus for a laundry treatment agent, comprising a liquid storage box for a laundry treatment agent and a liquid storage box installation chamber, wherein,
a sensing module is arranged between the liquid storage box and the liquid storage box installation chamber for sensing whether the liquid storage box is moved off the liquid storage box installation chamber; and
after obtaining the signal from the sensing module that the liquid storage box is moved off the liquid storage box installation chamber, the signal that the liquid storage box is moved off the liquid storage box installation chamber is sent, and an order for purchasing the same type of laundry treatment agent as that in the liquid storage box is generated.

12. The automatic dispensing apparatus for a laundry treatment agent according to claim 11, wherein,
the sensing module includes:
a near-field communication chip, set on the liquid storage box; and
a reader for the near-field communication chip, set on the liquid storage box installation chamber;
wherein, when the chip reader for the near-field communication chip fails to identify the near-field communication chip, sending a signal that the liquid storage box is moved off the liquid storage box installation chamber.

13. The automatic dispensing apparatus for a laundry treatment agent according to claim 12, wherein,
the near-field communication chip comprises an RFID chip or an NFC chip;
the reader for the near-field communication chip comprises an RFID chip reader or an NFC chip reader.

14. The automatic dispensing apparatus for a laundry treatment agent according to claim 12, wherein, the sensing module comprises,
an abutting portion, slidably disposed in the liquid storage box installation chamber; and
a distance sensor, used for sensing a distance by which the abutting portion is pushed by the liquid storage box, to determine whether the liquid storage box is moved off the liquid storage box installation chamber.

15. The automatic dispensing apparatus for a laundry treatment agent according to any one of claims 11-14, wherein,
the liquid storage box is provided with a wireless communication unit, and the wireless communication unit is connected to the sensing module for sending a signal that the liquid storage box is moved off the liquid storage box installation chamber;
preferably, the wireless communication unit is one selected from a group consisting of Bluetooth, infrared, and near field communication.

16. A method for purchasing a laundry treatment agent, being executed on an automatic dispensing apparatus for laundry treatment agent or on a laundry treatment appliance, comprising,
obtaining a signal that a liquid storage box is moved off a liquid storage box installation chamber;
generating an order for purchasing the same type of laundry treatment agent with that in the liquid storage box.

17. The method for purchasing a laundry treatment agent according to claim 16, wherein,
a process of obtaining the signal that the liquid storage box is moved off the liquid storage box installation chamber comprises,
obtaining a signal that a reader disposed on the installation structure of the liquid storage box cannot identify a signal of the near-field chip of the liquid storage box.

18. The method for purchasing a laundry treatment agent according to claim 16, wherein, a process of obtaining the signal that the liquid storage box is moved off the liquid storage box installation chamber comprises, obtaining a signal that a movement distance of the abutting portion arranged in the liquid storage box installation chamber is greater than a set threshold.

19. The method for purchasing a laundry treatment agent according to claim 16, wherein,
after obtaining the signal that the liquid storage box is moved off the liquid storage box installation chamber, and before generating an order for purchasing the same type of laundry treatment agent as that in the liquid storage box, a process also is comprised: sending confirming information to user whether to generate an order for purchasing the laundry treatment agent, and generating the order after receiving the confirming information to generate the order by user.

20. The method for purchasing a laundry treatment agent according to any one of claims 16-18, wherein,
a process of generating an order for purchasing the same type of laundry treatment agent as that in the liquid storage box comprises,
obtaining an order record of purchasing a laundry treatment agent by user, and determining a laundry treatment agent purchased most frequently in the order record of the user within a preset time from the current date, and generating an order according to the information of the laundry treatment agent purchased most frequently; or,
obtaining type information and material information of laundry set by the user on the server; recommending a laundry treatment agent by the server according to the set type information and material information of laundry when receiving a signal that the liquid storage box is moved off the liquid storage box installation chamber, and generating an order according to the laundry treatment agent recommended by the server.
